# EUROPEAN PATENT APPLICATION

(11) **EP 1 867 950 A1**
(43) Date of publication of application: **19.12.2007**
(21) Application number: 06253090.2
(22) Date of filing: 14.06.2006
(51) Int. Cl.: G01C 11/00, G01C 11/06, G01C 15/02

(54) **Photogrammetric mapping of inaccessible terrain**

(71) Applicant: Rafael-Armament Development Authority Ltd., 31021 Haifa (IL)
(72) Inventor: Devir, Menachem, Kiryat Motzkin (IL)
(74) Representative: Cooper-Rolfe, Elizabeth Louise

(57) **Abstract**

A device (20) for establishing a ground control point photogrammetry. The Device includes a signalling mechanism (34) for providing a photographically recordable signature, and a navigation mechanism (30) for determining absolute geographic coordinates of the signalling mechanism.

## Description

The present invention relates to photogrammetry and, more particularly, to a device that facilitates photogrammetric mapping of inaccessible terrain and a method of using that device.

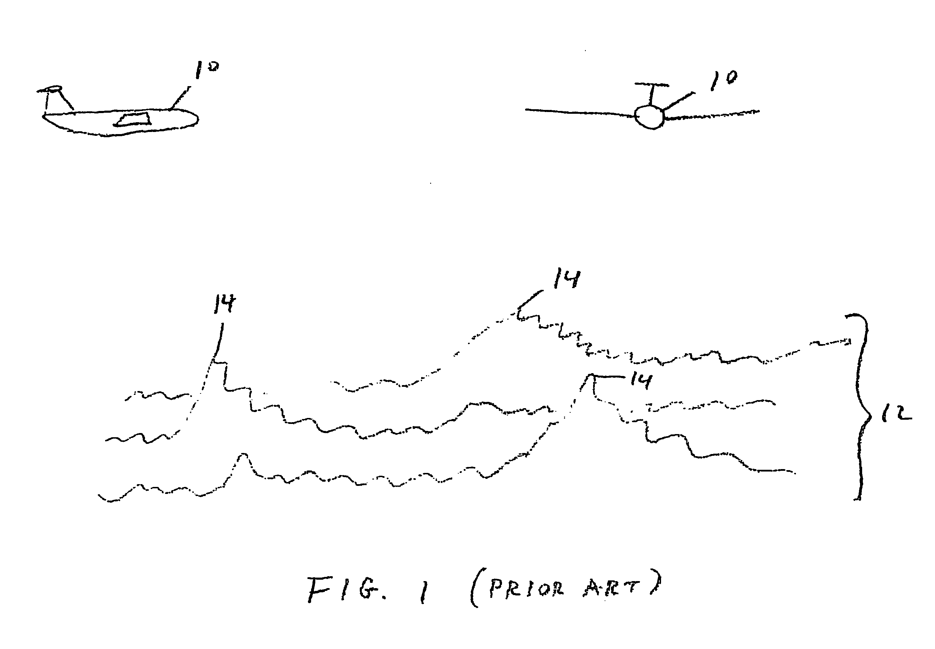

Figure 1 illustrates the prior art method of photogrammetry for obtaining a digital terrain map (DTM) of a terrain **12.** Terrain **12** is photographed from two different vantage points above terrain **12,** to provide two respective images of terrain **12** from the two vantage points. In the example illustrated in Figure 1, terrain **12** is photographed by two aerial platforms **10** at the two different vantage points. Standard well-known stereo correlation algorithms are used to transform the two images into a relative DTM that is a map of terrain **12** up to a scale factor. Altimeters on board aerial platforms **10** measure the altitudes of aerial platforms **10** relative to terrain **12.** The measured relative altitudes are used to compute the correct scale factor that makes distances between points of the DTM equal to the true distance between corresponding points of terrain **12.** Note that aerial platforms **10** need not be directly above terrain **12** as long as the vantage points of aerial platforms **10** provide adequate views of terrain **12.**

At this point, the DTM is a map of the true shape and size of terrain **12,** but not of the location and orientation of terrain **12** in the real world. In other words, the coordinates of the DTM are scaled correctly but still are not absolute geographic coordinates. To transform the coordinates of the DTM to absolute geographic coordinates (latitude, longitude and altitude, or their equivalents), it is necessary to determine the absolute geographic coordinates of at least three non-collinear "ground control points" **14** that are mapped in the DTM. This is done independently of the photographing of terrain **12,** for example by surveying ground control points **14.** With the absolute geographic coordinates of ground control points **14** known, it is trivial to transform all the coordinates of the DTM to absolute geographic coordinates. In Figure 1, ground control points **14** are illustrated as local elevation maxima; but any suitable landmarks could be used as ground control points **14.**

Alternatively, both the scale factor and the location and orientation of terrain **12** in the real word are determined from the absolute geographic coordinates of ground control points **14.** The scale factor can be inferred from the absolute geographic coordinates of ground control points **14** because those absolute geographic coordinates define the true size of the polygon whose vertices are at ground control points **14.**

This photogrammetric mapping method is feasible as long as terrain **12** is accessible for surveying ground control points **14,** but not if terrain **12** is inaccessible. For example, terrain **12** may be behind enemy lines. There is thus a widely recognized need for, and it would be highly advantageous to have, a photogrammetric method of mapping terrains **12** such that independent surveying of ground control points **14** in those terrains **12** is difficult or impossible.

According to the present invention there is provided a device for establishing a ground control point for photogrammetry, including: (a) a signaling mechanism for providing a photographically recordable signature; and (b) a navigation mechanism for determining absolute geographic coordinates of the signaling mechanism.

According to the present invention there is provided a method of mapping a terrain, including the steps of: (a) placing at least three ground control point establishing devices at respective locations on the terrain; and (b) for each of the at least three ground control point establishing devices: (i) determining respective absolute geographic coordinates of the each ground control point establishing device, and (ii) photographing a respective photographically recordable signature of the each ground control point establishing device from at least a first vantage point above the terrain.

A device embodying the present invention comprises a ground control point emulation unit that functions as a self-surveying landmark for photogrammetric mapping. Three such devices may be introduced to an inaccessible terrain **12,** and then are used instead of landmarks **14** as ground control points.

The basic device of the present invention preferably includes a signalling mechanism for providing a photographically recordable signature of the device and a navigation mechanism for determining the absolute geographic coordinates of the signaling mechanism. A photographically recordable signature is a signal in a wavelength band that can be recorded photographically, either by analog photography, in which the light-sensitive medium typically is photographic film, or by digital photography, in which the light-sensitive medium typically is a charge coupled detector (CCD) array for photography in visible light or an analogous array of infrared sensors for photography in infrared light. The wavelength bands used typically are in the visible or infrared portions of the electromagnetic spectrum. That the signal is a "signature" means that the signal is tied to, and directly indicative of, the location of the signaling mechanism. For example, a flare gun would not be such a signaling mechanism because the flare fired from the flare gun moves with respect to the flare gun.

Preferably, the signaling mechanism is transient, meaning that the photographically recordable signature lasts only long enough to be photographed.

In one embodiment of the device of the present invention, the signaling mechanism includes an explosive charge. In another embodiment of the device of the present invention, the signaling mechanism includes a source of photographically recordable light. Preferably, this light source is azimuthally omnidirectional. Preferably, this light source is operative to provide an indication of the absolute geographic coordinates determined by the navigation mechanism, for example by modulating the emitted light so as to digitally encode the absolute geographic coordinates in the emitted light. In yet another embodiment of the device of the present invention, the signaling mechanism includes a refrigerator, *i,e.,* a mechanism for producing local cooling in the immediate vicinity of the device. Such local cooling is recordable by infrared photography.

Preferably, the navigation mechanism includes a GPS receiver. Alternatively or additionally, the navigation mechanism includes an inertial navigation system.

Preferably, the device of the present invention includes a transmitter for transmitting the absolute geographic coordinates determined by the navigation mechanism. Most preferably, the transmitter is an RF transmitter.

Preferably, the device of the present invention includes a receiver for receiving a trigger signal that triggers the signaling mechanism. Most preferably, the receiver is an RF receiver.

The method of the present invention is a method of mapping a terrain. The basic method of the present invention includes three steps.

In the first step, at least three ground control point establishing devices are placed at three respective locations on the terrain.

In the second step, the respective absolute geographic coordinates of each ground control point establishing device is determined, and a respective photographically recordable signature of each ground control point establishing device is photographed from at least one vantage point above the terrain. The photography could be digital, in which case the light-sensitive recording medium is a sensor array such as a CCD array, or analog, in which case the light-sensitive recording medium is photographic film.

In the third step, the terrain is photographed from at least a second and third vantage point above the terrain. Normally, the first and second vantage points are substantially identical. As in the prior art, for the images thus acquired to be suitable for input to a stereo correlation algorithm, the second and third vantage points must be different. Also as in the prior art method, the vantage points need not be directly above the targeted terrain as long as these vantage points provide adequate views of the targeted terrain.

Preferably, the photography is effected by at least one elevated platform, for example by one or more aerial platforms. The photography could be effected using a single elevated platform located at respective vantage points at at least two different times. Preferably, the photography from the second and third vantage points is effected substantially simultaneously by two elevated platforms, each elevated platform then being located at a respective one of the second and third vantage points.

Preferably, the ground control point establishing devices are devices of the present invention. So, for example, the absolute geographic coordinates of each ground control point establishing device are determined using a respective navigation mechanism, for example a respective GPS receiver or a respective inertial navigation system.

Similarly, the method of the present invention preferably includes the step of providing, for each ground control point establishing device, the associated respective signature, preferably as done by the devices of the present invention: by detonating an explosive charge, by cooling the immediate vicinities of the devices or by emitting photographically recordable light. Optionally, the emitted light is modulated in a manner that indicates the absolute geographic coordinates of the associated ground control point establishing device.

Furthermore, the method of the present invention preferably includes the step of transmitting the absolute geographic coordinates of each ground control point establishing device, preferably as done by the devices of the present invention: for example, using respective RF transmitters.

For a better understanding of the present invention, and to show how the same may be carried into effect, reference will now be made, by way of example, to the accompanying drawings, in which:-
FIG. 1 is an illustration of prior art photogrammetric mapping;
FIGs. 2-4 are schematic illustrations of three devices of the present invention.

The present invention relates to a device and an associated method which can be used for photogrammetric mapping. Specifically, embodiments of the present invention can be used to map inaccessible terrain.

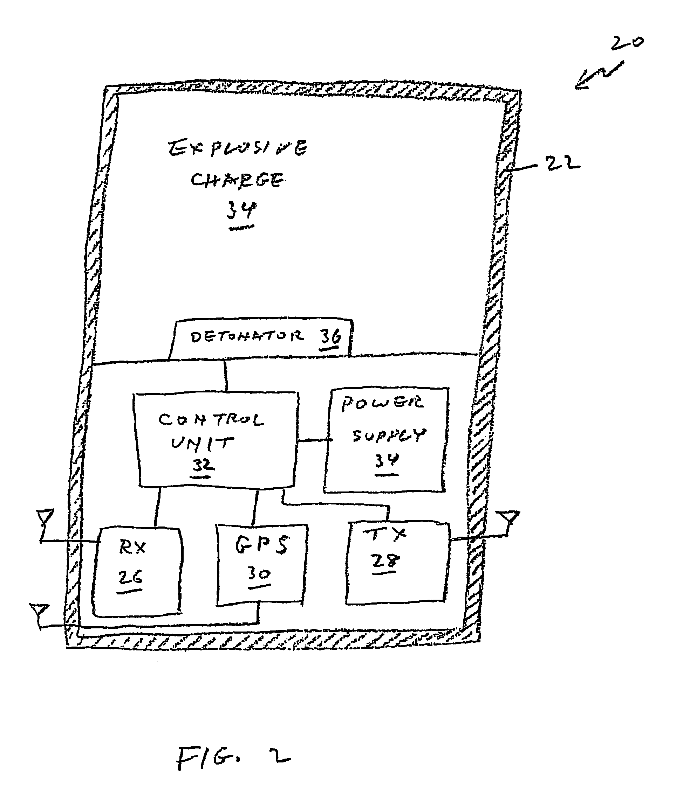

Referring again to the drawings, Figure 2 is a schematic illustration, partly in block diagram form, of a first embodiment 20 of a device of the present invention. Inside a ruggedized housing **22** are mounted a control unit **32,** a power supply **34,** a GPS receiver **30,** an RF transmitter **28** and an RF receiver **26.** The upper half of housing **22** is occupied by an explosive charge **34** that is detonated by a detonator **36.** Control unit **32** receives operating power from power supply **34.** GPS receiver **30,** RF transmitter **28,** RF receiver **26** and detonator **36** also receive operating power from power supply **34,** via control unit **32.** Control unit **32** operates the other components of device **20** as described below.

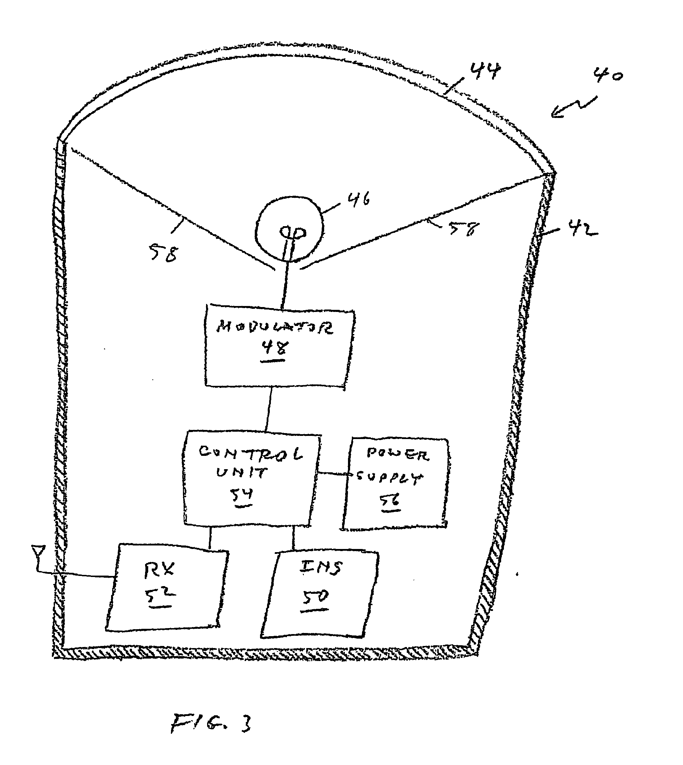

Figure 3 is a schematic illustration, also partly in block diagram form, of a second embodiment **40** of a device of the present invention. Inside a ruggedized housing **42,** that is surmounted by a transparent dome **44,** are mounted a control unit **54,** a power supply **56,** an inertial navigation system **50,** a RF receiver **52,** a modulator **48,** a light source **46** and an opaque shield **58.** Control unit **32** receives operating power from power supply **56.** Inertial navigation system **50,** RF receiver **52,** modulator **48** and light source **46** also receive operating power from power supply **56,** via control unit **54.** Control unit **54** operates the other components of device **40** in much the same fashion as control unit **32** operates the other components of device **20,** as described below. For now it suffices to point out that the main difference between devices **20** and **40** lies in their respective photographically recordable signatures. The signature of device **20** is the flash of the explosion of explosive charge **34.** As such, the signature of device **20** is a transient signature. The signature of device **40** is light emitted by light source **46.** To this end, light source **46** is sufficiently bright to be recorded photographically from the appropriate distance for the photogrammetric survey in which device **40** is used. In one variant of device **40,** light source **46** includes a xenon flash lamp. In another variant of device **40,** light source **46** includes a LED.

GPS receiver **30** usually is preferred to inertial navigation system **50** because GPS receiver **30** is inherently more accurate than inertial navigation system **50.** Inertial navigation system **50** must be initialized with its absolute geographic coordinates before it is deployed. Then, while inertial navigation system **50** is deployed, errors in the measured absolute geographic coordinates accumulate. The advantage of inertial navigation system **50** over GPS receiver **30** is that for GPS receiver **30** to determine its absolute geographic coordinates GPS receiver **30** must receive signals of adequate strength from an adequate number of GPS satellites.

In a variant of device **40** intended for use behind enemy lines, light source **46** emits only infrared light, so as not to be easily visible to enemy soldiers. To this end, if light source **46** is a xenon lamp, light source **46** also includes a filter that blocks visible radiation. Alternatively, dome **44** is transparent to infrared light but not to visible light. In addition, also to reduce the visibility of device **40** to enemy soldiers, device **40** includes opaque shield **58** that, along with housing **42,** ensures that, although device **40** emits light in all azimuthal directions, device **40** emits light only upwards and not to the sides.

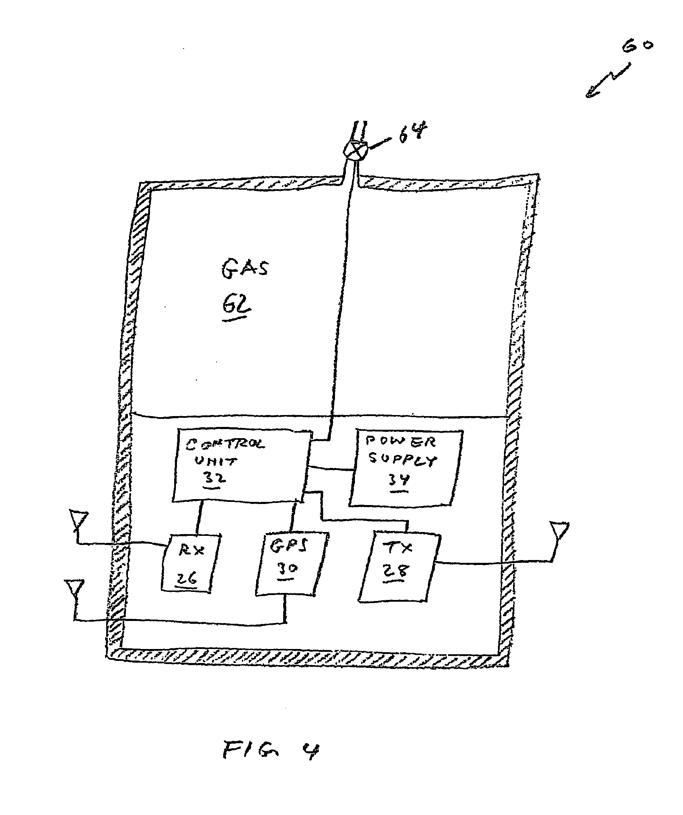

Figure 4 is a schematic illustration, also partly in block diagram form, of a third embodiment **60** of a device of the present invention. Device **60** is substantially identical to device **20,** except that instead of explosive charge **34** and detonator **36,** device **60** has a tank of a gas **62** such as air, nitrogen or argon at high pressure and a release valve **64.** When control unit **32** opens valve **64,** gas **62** rushes out of valve **64.** The resulting expansion of gas **62** creates a cold plume, immediately above device **60,** that is recordable by infrared photography.

Figure 1, in addition to illustrating the prior art method of photogrammetric mapping, also illustrates the method of the present invention, with the understanding that devices **20, 40** or **60** are substituted for landmarks **14.** Three embodiments of the method of the present invention for conducting a photogrammetric survey are presented below. All three embodiments start with the same first step: deploying at least three devices **20, 40** or **60** non-collinearly in the targeted terrain. If the photogrammetric survey is to be conducted behind enemy lines, devices **20, 40** or **60** are emplaced by secret agents. Alternatively, devices **20, 40** or **60** are dropped onto terrain **12** by aerial platforms **10.** To be usable under the alternative deployment method, devices **40** and **60** must be configured to land right-side-up, or at least to right themselves after landing.

The first embodiment of the present invention uses two aerial platforms **10** and three or more devices **20** or **60.** One of aerial platforms **10** signals devices **20,** via RF receivers **26,** to turn on GPS receivers **30** so as to measure the absolute geographic coordinates of devices **20** or **60.** As is known in the art, such measurements often require several seconds to perform, depending on how many GPS satellites are visible to each device **20** or **60** and on the strength of the signals from those satellites. As soon as each device **20** or **60** has obtained a fix of its absolute position, that device **20** or **60** transmits its absolute geographic coordinates to the interrogating aerial platform **10,** using RF transmitter **28.**

When all the deployed devices **20** or **60** have finished transmitting their absolute geographic positions, one of aerial platforms **10** issues a command to all the deployed devices **20** to detonate their explosive charges **34,** using detonators **36,** or to all deployed devices **60** to open their valves **64** to release gas **62.** At the same time, both aerial platforms **10** photograph the targeted terrain from their respective vantage points. The two respective photographic images acquired by the two aerial platforms **10** include records of the signature flashes of the explosions of explosive charges **34** of devices **20** or of the signature cold plumes of gas **62** of devices **60.** A standard stereo correlation algorithm is used to convert the photographic images to a relative DTM of terrain **12** as described above. Except in degenerate cases (*e.g*., three devices **20** or **60** deployed at the vertices of an equilateral triangle), there is enough information in the relative DTM of terrain **12** obtained from the two images to associate each signature flash or cold plume with its respective absolute geographic coordinates. The signature flashes or cold plumes then serve as ground control points for transforming the coordinates of the DTM to absolute geographic coordinates, *i.e.,* to provide and absolute DTM of terrain **12.**

Alternatively, only one aerial platform **10** is used. Aerial platform **10** signals devices **20** or **60** to measure their absolute geographic coordinates as described above. Devices **20** or **60** transmit their absolute geographic coordinates to aerial platform **10.** Aerial platform **10** then issues a command to all the deployed devices **20** or **60** to produce their photographically recordable signatures (the flashes of the explosions of explosive charges **34** or the cold plumes of gas 62). As the deployed devices **20** or **60** produce their photographically recordable signatures, aerial platform **10** photographs the targeted terrain from its vantage point while using its on-board navigation system to measure both its own absolute geographic coordinates and its own absolute orientation. Then, aerial platform **10** flies to a second vantage point that is different from the first vantage point and photographs the targeted terrain again while using its on-board navigation system to measure both its own absolute geographic coordinates and its own absolute orientation. Based on the absolute positions and orientations of aerial platform **10** at both vantage points, the locations, in the terrain image that is acquired at the second vantage point, where the photographically recordable signatures would have been recorded if the deployed devices **20** or **60** had produced their photographically recordable signatures while aerial platform **10** was at the second vantage point, are computed by triangulation. A standard stereo correlation algorithm is used to convert the photographic images to a relative DTM of terrain **12** as described above. As before, the signature flashes or cold plumes serve as ground control points, via their actual records in the first photographic image and their inferred locations in the second photographic image, for transforming the coordinates of the DTM to absolute geographic coordinates.

In variants of the first embodiment that normally are less preferred but that may be necessary under some circumstances, photography of the signatures of deployed devices **20** or **60** is separated from photography of terrain **12.** For example, a single aerial platform **10** may be used to photograph the signatures from a first vantage point and then to photograph terrain **12** from second and third vantage points that are different from each other and from the first vantage point. At all three vantage points, aerial platform **10** uses its on-board navigation system to measure both its own absolute geographic coordinates and its own absolute orientation. The locations, in the two terrain images, where the photographically recordable signatures would have been recorded if the deployed devices **20** or **60** had produced their photographically recordable signatures while aerial platform **10** was at the second and third vantage points, are computed by triangulation. A standard stereo correlation algorithm is used to convert the terrain images to a relative DTM of terrain **12,** and the signature flashes or cold plumes serve as ground control points, via their inferred locations in the terrain images, for transforming the coordinates of the DTM to absolute geographic coordinates.

In a second less preferred variant, two aerial platforms **10** are used. The first aerial platform **10** photographs the signatures from a first vantage point. The second aerial platform **10** photographs terrain **12** from second and third vantage points. The second and third vantage point must be different from each other, but one of the second or third vantage points may be the same as the first vantage point. A DTM with absolute geographic coordinates is produced from the two images of terrain 12 as in the first less preferred variant.

The second embodiment uses one aerial platform **10** and three or more devices **40.** Aerial platform **10** signals devices **40,** via RF receivers **52,** to turn on their light sources **46.** In each device **40,** control unit **54** obtains the absolute geographic coordinates of that device **40** from inertial navigation system **50** and uses modulator **48** to modulate the light emitted by light source **46** in a manner that encodes the absolute geographic coordinates of that device **40** in that emitted light. An optical sensor on board aerial platform **10** receives these optical signals, and a processor on board aerial platform **10** decodes the signals to obtain the absolute geographic coordinates of devices **40.**

Now aerial platform **10** flies to a first vantage point above terrain **12** and photographs terrain **12.** The resulting photographic image includes records of the light emitted by devices **40,** as signatures of devices **40.** Then, while devices **40** continue to emit their signature light, aerial platform **10** flies to a second vantage point above terrain **12** and photographs terrain **12.** Again, the resulting photographic image includes records of the light emitted by devices **40,** as signatures of devices **40.** Further processing of the two photographic images to obtain an absolute DTM is as in the first variant of the embodiment.

Alternatively, aerial platform **10** signals devices **40** to turn off their light sources **46** after aerial platform **10** has photographed terrain **12** from the first vantage point. At both the first and second vantage points, aerial platform **10** uses its on-board navigation system to measure both its own absolute geographic coordinates and its own absolute orientation. Only the first photographic image of terrain **12** then includes records of the light emitted by devices **40;** but the locations in the second photographic image of terrain **12,** where records of the light emitted by devices **40** would have been if devices **40** had continued to emit light, are determined as in the second variant of the first embodiment. Further processing of the two photographic images to obtain an absolute DTM is as in the second variant of the first embodiment.

The third embodiment uses one or two aerial platforms **10,** and either devices **20** or devices **40** or devices **60,** but devices **20, 40** or **60** are operated sequentially rather than simultaneously. For definiteness, the third embodiment will be described in terms of two aerial platforms **10** and n≥3 devices **20.** First, one of aerial platforms **10** signals a device **20,** via RF receiver **26,** to turn on OPS receiver **30** so as to measure the absolute geographic coordinates of that device **20.** When that device **20** has obtained a fix of its absolute position, that device **20** transmits its absolute geographic coordinates to the interrogating aerial platform **10,** using RF transmitter **28.** Then one of aerial platforms **10** issues a command to that device **20** to detonate its explosive charge **34.** At the same time, either both aerial platforms **10** photograph a portion of terrain **12,** including the flash from the explosion of explosive charge **34,** from their respective vantage points; or one aerial platform **10** photographs the portion of terrain **12,** including the flash from the explosion of explosive charge **34,** from a first vantage point, followed by photography by the same aerial platform **10** or by a second aerial platform **10** of the same portion of terrain **12** but not including the flash from the explosion of explosive charge **34,** from a second vantage point different from the first vantage point. In the latter case of sequential photography of the portion of terrain **12** in which that device **20** is located, while the aerial platform(s) **10** photograph(s) that portion of terrain **12,** the aerial platform(s) **10** also use its/their on-board navigation system(s) to measure its/their respective absolute geographic coordinates and its/their absolute orientations. This is repeated for all n devices **20.**

2*n* photographic images thus have been acquired, of respective portions of terrain **12.** In each photographic image, either a record of a signature of a device **20** tied to a known absolute geographical location appears, or the absolute location of that device **20** can be inferred as described above. The *n* portions of terrain **12** are chosen to overlap. Known stereo correlation algorithms are used, in conjunction with known algorithms that cross-correlate photographic images that correspond to overlapping portions of terrain **12** so as to chain the photographic images together, to transform these images to an absolute DTM of terrain **12.**

While the invention has been described with respect to a limited number of embodiments, it will be appreciated that many variations, modifications and other applications of the invention may be made.

## Claims

1. A device for establishing a ground control point for photogrammetry, comprising:
(a) a signaling mechanism for providing a photographically recordable signature; and
(b) a navigation mechanism for determining absolute geographic coordinates of said signaling mechanism.

2. The device of claim 1, wherein said signaling mechanism is transient.

3. The device of claim 1 or 2, wherein said signalling mechanism includes an explosive charge.

4. The device of claim 1, wherein said signaling mechanism includes a source of photographically recordable light.

5. The device of claim 4, wherein said source is azimuthally omnidirectional.

6. The device of claim 4 or 5, wherein said source is operative to provide an indication of said absolute geographical coordinates.

7. The device of claim 1, wherein said signaling mechanism includes a refrigerator.

8. The device of any one of claims 1 to 7, wherein said navigation mechanism includes a GPS receiver.

9. The device of any one of claims 1 to 8, wherein said navigation mechanism includes an inertial navigation system.

10. The device of any preceding claim, further comprising:
(c) a transmitter for transmitting said absolute geographic coordinates.

11. The device of claim 10, wherein said transmitter is a RF transmitter.

12. The device of any preceding claim, further comprising:
(c) a receiver for receiving a trigger signal for said signaling mechanism.

13. The device of claim 12, wherein said receiver is a RF receiver.

14. A method of mapping a terrain, comprising the steps of:
(a) placing at least three ground control point establishing devices at respective locations on the terrain; and
(b) for each of said at least three ground control point establishing devices:
(i) determining respective absolute geographic coordinates of said each ground control point establishing device, and
(ii) photographing a respective photographically recordable signature of said each ground control point establishing device from at least a first vantage point above the terrain.

15. The method of claim 14, further comprising the step of:
(c) photographing the terrain from at least a second and third vantage point above the terrain.

16. The method of claim 15, wherein said first and second vantage points are substantially identical.

17. The method of claim 14,15 or 16, wherein said photographing is effected by at least one elevated platform.

18. The method of claim 17, wherein said at least one elevated platform is at least one aerial platform.

19. The method of claim 17 or 18, wherein said photographing is effected using a single said elevated platform at at least two different times corresponding to respective said vantage points.

20. The method of claim 17, wherein said photographing from said second and third vantage points is effected substantially simultaneously by two said elevated platforms, each said elevated platform then being at a respective one of said second and third vantage point.

21. The method of any one of claims 14 to 20, wherein, for each said ground control point establishing device, said determining of said absolute geographic coordinates is effected using a respective navigation mechanism.

22. The method of claim 21, wherein said respective navigation mechanisms include respective GPS receivers.

23. The method of claim 21 or 22, wherein said respective navigation mechanisms include respective inertial navigation systems.

24. The method of any one of claims 14 to 23, further comprising the step of:
(d) for each said ground control point establishing device: providing said respective photographically recordable signature.

25. The method of claim 24, wherein, for each said ground control point establishing device, said respective photographically recordable signature is provided by detonating an explosive charge.

26. The method of claim 24, wherein, for each said ground control point establishing device, said respective photographically recordable signature is provided by emitting photographically recordable light.

27. The method of claim 26, wherein said emitting of said photographically recordable light includes modulating said light in a manner that indicates said absolute geographic coordinates of said respective ground control point establishing device.

28. The method of claim 24, wherein, for each said ground control point establishing device, said respective photographically recordable signature is provided by cooling an immediate vicinity of said each ground control point establishing device.

29. The method of any one of claims 14 to 28, further comprising the step of:
(d) for each said ground control point establishing device: transmitting said respective absolute geographic coordinates.

30. The method of claim 29, wherein, for each said ground control point establishing device, said transmitting of said respective absolute geographic coordinates is effected using a respective RF transmitter.
